# EUROPÄISCHE PATENTSCHRIFT

(11) **EP 1 369 303 B1**
(45) Veröffentlichungstag und Bekanntmachung des Hinweises auf die Patenterteilung: **26.07.2006**
(21) Anmeldenummer: 03012787.2
(22) Anmeldetag: 05.06.2003
(51) Int. Cl.: B60R 13/00, B60R 19/24

(54) **Befestigung eines Formteils**
Attaching a molded article
Fixation d'un article moulé

(30) Priorität: 06.06.2002 DE 10225328
(43) Veröffentlichungstag der Anmeldung: 10.12.2003
(73) Patentinhaber: PEGUFORM GMBH, 79268 Bötzingen (DE)
(72) Erfinder:
(74) Vertreter: Patentanwälte Westphal, Mussgnug & Partner

(56) Entgegenhaltungen:
- DE-A- 10 013 574
- FR-A- 2 804 645
- GB-A- 2 340 175

## Beschreibung

Die Erfindung betrifft eine Vorrichtung zur Befestigung von großflächigen, dünnwandigen Formteilen, die vornehmlich aus Kunststoff gefertigt werden, an steifen Rahmenkonstruktionen, wie beispielsweise einer Fahrzeugkarosserie. Solche Formteile kommen beispielsweise als Stossfänger oder deren Verkleidungen in Fahrzeugen zum Einsatz. Diese Formteile dienen entweder der Abdeckung von Oberflächen oder bestimmen die Formgebung, den optischen Eindruck, die aerodynamischen Eigenschaften und können auch noch andere Funktionen wie den Schutz von Maschinenteilen oder crashabsorbierende Wirkungen entfalten. Zur Befestigung eines Formteils wird mindestens ein Führungsprofil verwendet, welches mit der Rahmenkonstruktion fest verbunden ist. Der Befestigungsbereich des Formteils wird in diese Rahmenkonstruktion montiert und durch eine formschlüssige Verbindung mit dem Führungsprofil gehalten.

Vor allem bei Personenkraftwagen wird die Karosserie im Bereich der Front, Heck, oder Seitenfläche für die Anordnung eines Stossfängers oder dessen Verkleidung mit einer Nut oder Verprägung versehen. Damit kann der Stossfänger so mit der Karosserie verbunden werden, dass ein definiertes Spaltmaß zwischen Karosserie und Stossfänger oder Verkleidung eingehalten wird. Dieses Spaltmaß kann 10 bis 15 mm betragen und dient dazu, Relativbewegungen aufzunehmen, die durch einen Aufprall auf einen Gegenstand bei minimaler Geschwindigkeit (Parkiervorgang) verursacht werden. Wenn dieser Spalt vorhanden ist, bleibt die Lackierung im allgemeinen unbeschädigt, was aufwendige Reparaturlackierungen für Bagatellschadenfälle vermeiden hilft.
Wenn dieses Spaltmaß nur 1 bis 2 mm betragen darf, sei es aus konstruktiven Gründen oder aus Gründen des Design und der Optik, kann es bei der Montage zu Schäden an der Lackoberfläche kommen. Um diese Schäden zu vermeiden und ein über die Länge des Stossfängers konstantes Spaltmaß zu erzeugen, wird nach der Lehre von EP0417654A1 vorgeschlagen, eine sogenannte "schwimmende" Lagerung vorzusehen. Für diese einfache und montagefreundliche Befestigung wird eine Führungsschiene vorgesehen, die an die Karosserie angeschraubt oder angesteckt wird. Diese Führungsschiene nimmt dann den Stossfänger oder dessen Verkleidung auf. Dazu besteht die Führungsschiene aus 2 durchgehenden Stegen, die einen Längsschlitz bilden.

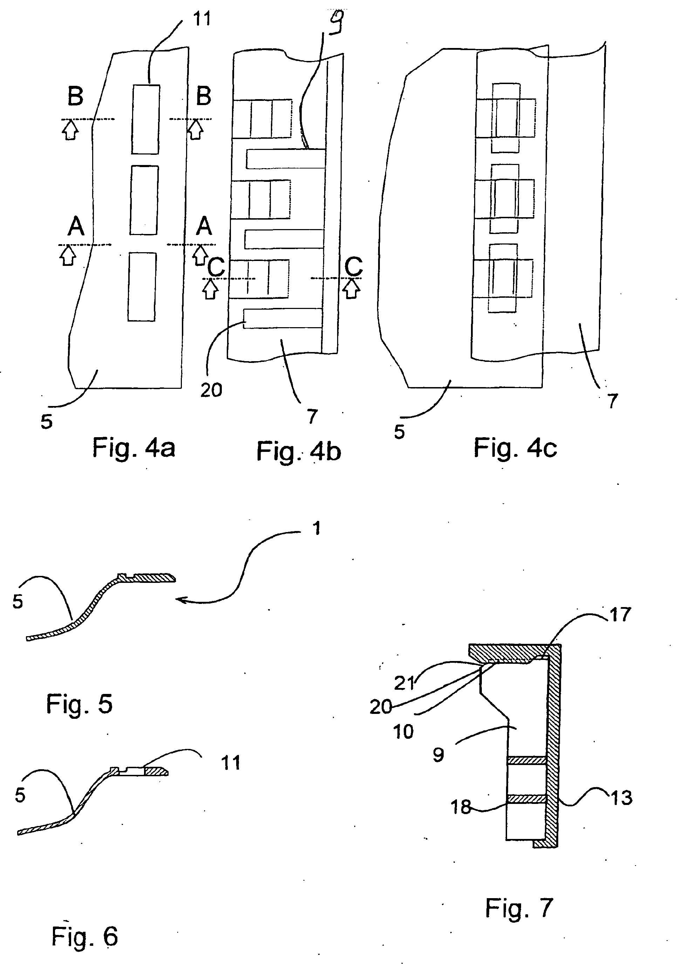

Bei der Montage hat sich gezeigt, dass es zeitaufwändig ist, den Stossfänger oder die Verkleidung exakt in den Längsschlitz einzupassen.
Dokument DE 100 13 574 A1 beschreibt ein Verbindungselement oder eine Führungsschiene wie in dem Patent EP 0417654 A1 mit einer flächigen Auflage für den Stossfänger (großflächige Führungsfläche 1.4) und Einrastelementen, die den Stossfänger von unten halten. Weiteres ist eine Variante offenbart (Fig. 5, Fig. 7), welche für das Einhalten eines definierten Spaltmaßes verwendet wird.
In der vorliegenden Anmeldung wird auf eine derartige Auflagefläche gänzlich verzichtet. Der Stossfänger oder die Außenverkleidung werden punktförmig auf den Rippen gelagert. Die dargestellte Lösung unterscheidet sich von der Erfindung zudem dadurch, dass zwar Verstärkungsrippen vorgesehen sind, diese aber nicht selbst als Auflage dienen, sondern nur als Stützkonstruktion für eine Auflagefläche wirken.
Daher wird nach DE 100 13 574 A1 keine punktförmige Auflage für den Stossfänger oder das Außenverkleidungsteil realisiert. Dokument WO02/22403 A1 ist ein Verbindungselement mit 2 Führungsschienen zum Verklemmen von zwei Verkleidungselementen. Die Lösung eignet sich zur Herstellung einer Nullfuge aber erlaubt die Einhaltung eines definierten Spaltmaßes nicht.
Durch die Verwendung von Einrastelementen, die sich sowohl in Verkleidungsteil A (obere Schiene) als auch in Verkleidungsteil B (untere Schiene) verklemmen, kann der zusammengebaute Stossfänger oder das Außenverkleidungsteil nicht mehr einfach demontiert werden. Die als Federelemente wirkenden Einrastelemente sind für eine nachträgliche Demontage nicht mehr zugänglich.
In Dokument GB2340175 A wird ein Verbindungselement zur Befestigung eines Stossfängers an einer Rahmenkonstruktion beschrieben. Der Stossfänger muss eine Haltevorrichtung aufweisen, die das Abstandsmaß von Stossfänger zu anderen Verkleidungsteilen bestimmt. Daher ist diese Lösung nur für spezielle Stossfängerkonstruktionen einsetzbar.
Die dargestellte Lösung unterscheidet sich von der Erfindung zudem dadurch, dass zwar Verstärkungsrippen vorgesehen sind, diese aber nicht selbst als Auflage dienen, sondern nur als Stützkonstruktion für eine Auflagefläche wirken. Daher kann mit dieser Lösung keine punktförmige Auflage für den Stossfänger realisiert werden.
Dokument GB2274872 A offenbart ebenfalls eine Auflage mit Rippen, die allerdings als wellenförmige Erhebungen ausgebildet sind, welche in entgegengesetzt geformte wellenförmige Senken des Stossfängers eingreifen. Der Stossfänger muss somit das der Auflage mit Rippen entgegengesetzte Profil aufweisen, was nicht nur eine Auflage in Form einer Fläche zur Folge hat, sondern auch bedeutet, dass der Stossfänger oder das Außenverkleidungsteil zumindest an dieser Befestigungsstelle sehr präzise gefertigt werden muss.
In Dokument FR2804645A1 wird auf eine Führungsleiste als zusätzliches Bauteil gänzlich verzichtet. Diese Lösung kann eine Demontage großflächiger Bauteile, wie Stossfänger, schwierig gestalten, vor allem, wenn es durch Stosskräfte zufolge eines Auffahrunfalls zu Verzug der Außenverkleidung kommt.
Die in Dokument GB2348688A vorgestellte Lösung für ein linienförmiges Führungsprofil kann nur bedingt für Fahrzeugaußenteile eingesetzt werden, da die Führungsleiste selbst nach dem Zusammenbau sichtbar bleibt. Im Fahrzeugbau sind allerdings aus Gründen des Luftwiderstandes und aus ästhetischen Gesichtspunkten sichtbare Befestigungselemente im allgemeinen unerwünscht.

Somit liefert keine der aus dem Stand der Technik bekannten Lösungen einen Hinweis darauf, wie eine Auflagefläche für das Außenverkleidungsteil, wie beispielsweise für einen Stossfänger oder eine Stossfängerverkleidung vermieden werden kann.
Daher wird nach der Lehre der Erfindung vorgeschlagen, auf den Längsschlitz in der Führungsschiene ganz zu verzichten. Anstatt des Längsschlitzes wird ein Führungsprofil eingesetzt, welches aus einer Leiste mit Noppen besteht und einer Anzahl Rippen, die zur Führung des Stossfängers oder einer beliebigen anderen Verkleidung dienen. Auf die Leiste kann in einer weiteren Ausführung der Erfindung auch ganz verzichtet werden.
Die punktförmige Auflage des Stossfängers auf Verstärkungsrippen des Führungsprofils nach der Erfindung erlaubt es in einfacher Weise, den Einrastmechanismus zu aktivieren, welcher aus einem Vorsprung und der zugehörigen Ausnehmung besteht. Aufgrund der Elastizität des Führungsprofils ist es möglich, den Stossfänger nach einer Beschädigung desselben jederzeit einfach wieder zu demontieren.
Der Abstand und die Anordnung der Rippen erlauben das sichere und punktgenaue Einrasten des Vorsprungs der Leiste in die zugehörige Ausnehmung auf dem Stossfänger. Zusätzlich können die Rippen so gestaltet werden, dass sie als Montagehilfe dienen. Dazu haben sie Abschrägungen und weisen auch Abstände auf, welche eine visuelle Indikation für die Montage geben können.
Der Vorteil dieser Erfindung liegt neben der nicht unwesentlichen Materialeinsparung und dadurch bedingten Kosteneinsparung für die Herstellung des Führungsprofils in einer Gewichtsreduktion gegenüber dem früher beschriebenen Stand der Technik.

Ein weiterer Vorteil der Erfindung besteht darin, dass die Einpassung des Formteils, welches beispielsweise als Stossfänger oder als Verkleidung im Außenbereich eines Fahrzeugs ausgeführt sein kann, schneller geht. Die Rippen, die der Leiste gegenüberliegen, dienen dazu, das Formteil zu positionieren. Durch eine Serie von Noppen, die in der oben beschriebenen Leiste auch miteinander verbunden sein können, wird das Formteil in Schlitzen festgehalten, die in dem Formteil selbst angebracht sind. Es handelt sich daher nicht um eine Klemmfunktion, wie in EP 0417654 A1 beschrieben wurde, sondern um eine formschlüssige Verbindung von Formteil und Führungsprofil.
Die Verwendung des erfindungsgemäßen Führungsprofils erlaubt somit eine positionsgenaue Ausrichtung von Formteil und Karosserie oder Rahmenkonstruktion. Damit wird auch das Spaltmaß festgelegt und die Lackierschicht bei der Montage nicht beschädigt. Wenn es durch einen Aufprall oder anderen Stoss zu einer Kraftwirkung von der Verkleidung über das Führungsprofil auf die Karosserie oder den Rahmen kommt, können die Toleranzen der formschlüssigen Verbindung so gewählt werden, dass es zu einer Gleitbewegung in Längsrichtung des Führungsprofils kommt.

Anwendung findet die Erfindung bevorzugt im Fahrzeugbau, könnte aber in gleicher Weise zur Abdeckung von Maschinen, Möbeln oder ähnlichem verwendet werden. Die Befestigung muss im Bereich des Fahrzeugbaus den höchsten Anforderungen genügen, da im Betrieb Stoßkräfte und durch die Fahrtgeschwindigkeit hervorgerufene Kräfte durch Windlasten und ähnlichem zu keiner Veränderung des Spaltmaßes führen dürfen. Solche Veränderungen würden vom Benutzer des Fahrzeugs als störend empfunden werden, da sie als Design- oder Konstruktionsfehler interpretiert werden.
Fig. 1 ist eine Schnittdarstellung durch eine mögliche Anordnung von Rahmen, Führungsprofil und Verkleidungsteil
Fig. 2 zeigt eine Darstellung einer ersten Variante des erfindungsgemäßen Führungsprofils
Fig. 3 zeigt eine Darstellung einer zweiten Variante des erfindungsgemäßen Führungsprofils,
Fig. 4a - 4c zeigen eine Ansicht von oben auf einen Ausschnitt aus dem Verkleidungsteil und dem darunter liegenden Führungsprofil in separater und zusammengebauter Ausführung
Fig. 5 zeigt einen Schnitt durch die Sektion A-A
Fig. 6 zeigt einen Schnitt durch die Sektion B-B
Fig. 7 zeigt einen Schnitt durch die Sektion C-C

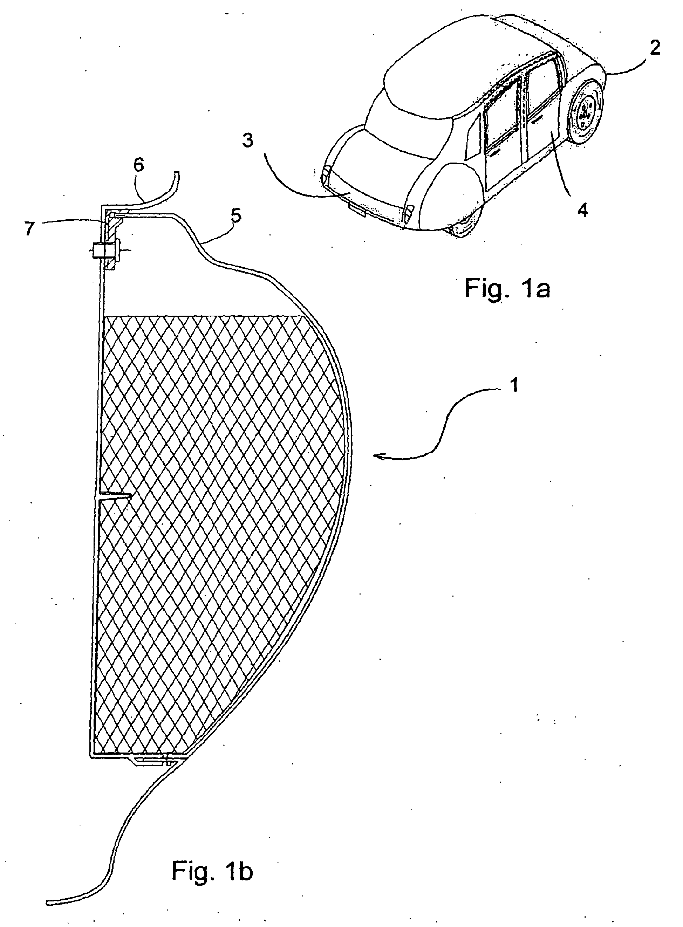

Fig. 1a ist eine perspektivische Darstellung eines möglichen Einsatzgebiets der Erfindung in einem Kraftfahrzeug. Bevorzugt wird die Erfindung zur Befestigung von Verkleidungen im Frontbereich 2, im Heckbereich 3 und im Seitenbereich 4 verwendet. Neben diesem bevorzugten Einsatzgebiet wären Anwendungen im Konsumgüterbereich, für Möbelverkleidungen, Maschinenverkleidungen und ähnliches denkbar. Solche Formteile werden vorzugsweise aus Kunststoff gefertigt. Fig. 1b ist eine Schnittdarstellung durch eine mögliche Anordnung von Rahmenkonstruktion 6, Führungsprofil 7 und Formteil 1 und dem Befestigungsbereich des Formteils 5. Anhand Fig. 1b wird erkennbar, dass die Formteile im Vergleich zu dem Führungsprofil eine große Oberfläche aufweisen. Es können daher mehrere gleichartige Führungsprofile am Umfang des Formteils 1 angebracht sein. Die Formteile werden über Verbindungselemente 12 an der Rahmenkonstruktion 6 gehalten. Die Verbindungselemente 12 können ohne Einschränkung der Allgemeinheit beispielsweise als Schrauben, Steckverbindungen, Klemmverbindungen, Klebeverbindungen oder ähnliches ausgeführt sein.

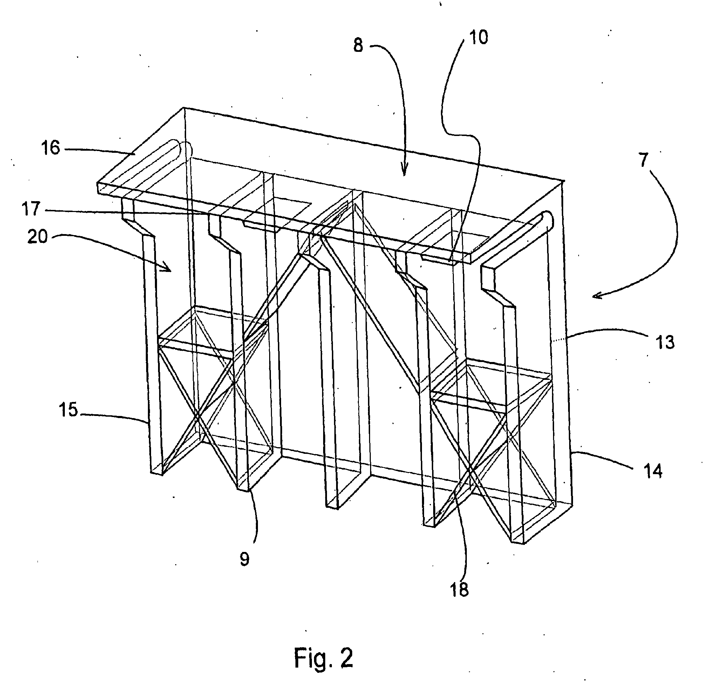

Fig. 2 stellt eine erste Ausführungsform des Führungsprofils 7 dar. Das Führungsprofil besteht aus einer Rückenplatte 13, die der Auflage an der Rahmenkonstruktion dient. An die Rückenplatte 13 sind je eine Seitenplatte 14, 15 angebracht, die in dieser Ausführungsform die seitliche Begrenzung des Führungsprofils darstellen. Eine Leiste 8 kann als Deckplatte 16 ausgeführt werden und dient der Aufnahme der Vorsprünge oder Noppen 10. Die Noppen 10 ragen dann in nicht dargestellte Öffnungen des Befestigungsbereichs des Formteils 5 hinein. Sie bilden eine formschlüssige Verbindung des Führungsprofils mit dem Befestigungsbereich des Formteils 5.
Zur Versteifung des Führungsprofils und zur Positionierung des Formteils können zusätzlich zu den Seitenplatten 14, 15 mehrere Rippen vorgesehen werden. Der Abstand der oberen Kante 17 besagter Rippen von der Deckplatte ist mindestens so groß wie die Wandstärke des Befestigungsbereichs des Formteils 5. Deswegen kann das Formteil 5 zwischen Deckplatte und oberer Rippenkante 17 eingepasst werden und die Vorsprünge 10 greifen dann in die auf dem Rand des Befestigungsbereichs des Formteils angebrachten Öffnungen ein. Die Quer- oder Kreuzrippen 18 können optional zur weiteren Verstärkung des Führungsprofils vorgesehen werden.

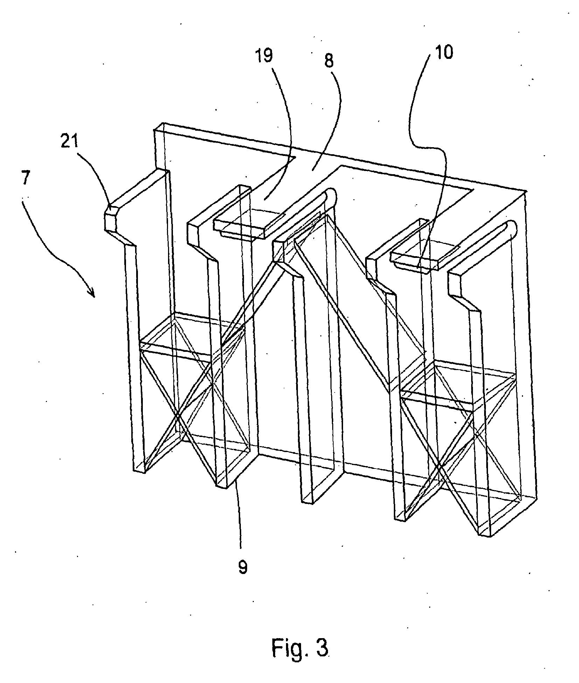

Fig. 3 zeigt eine Darstellung einer zweiten Variante des erfindungsgemäßen Führungsprofils. Zum Unterschied von der in Fig. 2 dargestellten Variante wird auf die Deckplatte 16 verzichtet. Statt dessen werden nur Leisten 19 vorgesehen, wo ein Vorsprung zum Eingriff in eine passende Öffnung des Befestigungsbereichs des Formteils 5 erforderlich ist. Diese Variante erlaubt nicht unbeträchtliche Materialeinsparungen und damit weitere Kosteneinsparungen gegenüber der vorher genannten Ausführungsart.
In Fig. 4a - 4c wird dargestellt, wie eine Verbindung zwischen Führungsprofil und Befestigungsbereich des Formteils aussehen kann. In einer Ansicht von oben - bezogen auf die Position in Fig. 1b - erkennt man in Fig. 4a die Öffnungen oder Schlitze 11 des Befestigungsbereichs des Formteils 5. Die Fig. 4b zeigt einen Ausschnitt aus dem Führungsprofil 7 mit einer möglichen Anordnung von Vorsprüngen und (unsichtbaren) Rippen 9.
In Fig. 4c wird die Position der beiden zusammengefügten Teile dargestellt, nämlich des Befestigungsbereichs des Formteils 5 und des Führungsprofils 7. Die Öffnungen haben einen größeren Querschnitt als die Noppen. Somit kann ein Formteil bei Einwirkung eines Stoßes in seiner Lage geringfügig verschoben werden, was einer Abfederung von vorwiegend seitlichen Stößen bei geringer Geschwindigkeit und geringer Aufprallkraft dient. Wenn ein Frontalstoß (vornehmlich für Formteile die im Frontbereich oder Heckbereich von Fahrzeugen eingebaut sind) auf das Formteil einwirkt, kann die Deckplatte 16 oder die Leiste mit Vorsprung 19 elastisch von den Rippenkanten weggedrückt werden, sodass die Befestigung selbst nicht zerstört wird, sondern es allenfalls ein Herausgleiten der Noppen aus den Öffnungen kommt. Bei Wegfall des Stoßes kehren die Noppen elastisch in die Ursprungslage zurück.
Fig. 5 zeigt einen Schnitt durch die Sektion A-A des Befestigungsbereichs des Formteils 5 in einem Bereich ohne und in Fig. 6 zeigt einen Schnitt durch die Sektion B-B des Befestigungsbereichs des Formteils 5 in einem Bereich mit Öffnung 11.
Fig. 6 zeigt einen Schnitt durch die Sektion C-C des Führungsprofils 7. Ein Vorsprung oder Noppe 10 ist als Bereich erhöhter Wandstärke ausgeführt.
In Fig. 7 ist auch der Teil der oberen Rippenkante 17, welcher dem Befestigungsbereichs des Formteils zugewendet ist, abgeschrägt. Damit kann die Positionierung des großflächigen Formteils bei der Montage erleichtert werden.

### Bezugszeichenliste

- 1.: Formteil (Stossfänger oder Verkleidung)
- 2.: Frontfläche
- 3.: Heckfläche
- 4.: Seitenfläche
- 5.: Befestigungsbereich des Formteils
- 6.: Karosserie oder Rahmen
- 7.: Führungsprofil
- 8.: Leiste
- 9.: Rippen
- 10.: Noppen
- 11.: Schlitz
- 12.: Verbindungselement
- 13.: Rückenplatte
- 14.: Seitenplatte
- 15.: Seitenplatte
- 16.: Deckplatte
- 17.: Obere Rippenkante
- 18.: Quer- oder Kreuzrippe
- 19.: Leiste mit Vorsprung
- 20.: Montageseite
- 21.: Abschrägung

## Patentansprüche

1. Führungsprofil (7) zur Befestigung von großflächigen Formteilen (1) an steifen Rahmenkonstruktionen (6), wobei an jeder Befestigungsstelle das Führungsprofil (7) an der Rahmenkonstruktion befestigt ist und das Führungsprofil (7) über eine Rückenplatte (13) auf der Rahmenkonstruktion (6) aufliegt und normal zur Rückenplatte (13) eine Leiste (8) und mehrere Rippen (9) angeordnet sind, wobei zwischen der Leiste (8) und den Rippen (9) ein Abstand ausgebildet ist, wobei in dem Abstand zwischen der Leiste (8) und den Rippen (9) eine Leiste des Formteils (1) aufgenommen wird **dadurch gekennzeichnet, dass** das Formteil zwischen Leiste und oberen Rippenkanten (17) der Rippen (9) eingepasst ist und dass auf der Leiste Noppen (10) angeordnet sind, die in Ausnehmungen des Formteils (1) eingreifen.

2. Fährungsprofil nach Anspruch 1, **dadurch gekennzeichnet, dass** die Leiste (8) unterbrochen ist.

3. Führungsprofil nach einem der vorhergehenden Ansprüche,
**dadurch gekennzeichnet, dass** die Ausnehmungen (11) als schlitzartige Öffnungen ausgebildet sind.

4. Führungsprofil nach Anspruch 3, **dadurch gekennzeichnet, dass** die Ausnehmungen (11) eine größere Längsabmessung als die Noppen (10) aufweisen.

## Claims

1. Guide profile (7) for fixing large moulded parts (1) to rigid frame structures (6), wherein the guide profile (7) is fixed to the frame structure at each fixing point, and the guide profile (7) bears against the frame structure (6) via a back plate (13), and a strip (8) and a number of ribs (9) are arranged normal to the back plate (13), wherein a space is formed between the strip (8) and the ribs (9), wherein a strip of the moulded part (1) is received in the space between the strip (8) and the ribs (9), **characterized in that** the moulded part is adapted to fit between the strip and the upper rib edges (17) of the ribs (9), and **in that** nubs (10) are arranged on the strip and engage in recesses of the moulded part (1).

2. Guide profile according to Claim 1, **characterized in that** the strip (8) is discontinuous.

3. Guide profile according to either of the preceding claims, **characterized in that** the recesses (11) are designed as slot-like openings.

4. Guide profile according to Claim 3, **characterized in that** the recesses (11) have a greater length dimension than the nubs (10).

## Revendications

1. Profilé de guidage (7) pour fixer des articles moulés (1) de grande surface sur des constructions de cadre rigides (6), le profilé de guidage (7) étant fixé à chaque point de fixation sur la construction du cadre et en s'appuyant sur la construction du cadre (6) par une plaque arrière (13), avec une baguette (8) ainsi que plusieurs nervures (9) disposées normalement par rapport à la plaque arrière (13), un intervalle étant prévu entre la baguette (8) et les nervures (9), une baguette de l'article moulé (1) étant logée dans l'intervalle entre la baguette (8) et les nervures (9),
**caractérisé en ce que**
l'article moulé est adapté entre la baguette et les arêtes supérieures (17) des nervures (9), et des noppes (10) en prise dans des évidements de l'article moulé (1) sont disposées sur la baguette.

2. Profilé de guidage selon la revendication 1,
**caractérisé en ce que**
la baguette (8) est interrompue.

3. Profilé de guidage selon l'une quelconque des revendications précédentes,
**caractérisé en ce que**
les évidements (11) sont des ouvertures en forme de fentes.

4. Profilé de guidage selon la revendication 3,
**caractérisé en ce que**
les évidements (11) présentent une dimension longitudinale plus importante que les noppes (10).
